# EUROPÄISCHE PATENTANMELDUNG

(11) **EP 3 736 168 A1**
(43) Veröffentlichungstag der Anmeldung: **11.11.2020**
(21) Anmeldenummer: 19172961.5
(22) Anmeldetag: 07.05.2019
(51) Int. Cl.: B60L 50/13, B60L 7/22, B60L 1/00

(54) **ANTRIEBSSYSTEM FÜR EIN DIESEL-ELEKTRISCHES FAHRZEUG**

(71) Anmelder: Siemens Aktiengesellschaft, 80333 München (DE)
(72) Erfinder: Pittius, Ekkehard, 91154 Roth (DE)

(57) **Zusammenfassung**

Die Erfindung betrifft ein Antriebssystem (1) für ein dieselelektrisches Fahrzeug mit
- zumindest einem Dieselmotor (2),
- zumindest einer dynamoelektrischen Maschine (5), vorzugsweise als Generator arbeitend, mit zumindest einem Wicklungssystem, wobei die dynamoelektrische Maschine (5) mit dem Dieselmotor (2) mechanisch gekoppelt ist und insbesondere die elektrische Leistung für zumindest einen elektrischen Antrieb bereitstellt,
wobei der elektrische Antrieb zumindest einen elektrischen Fahrmotor (16) und einen Zwischenkreisumrichter aufweist, mit zumindest einem Gleichrichter (7) und einem Wechselrichter (8), wobei ein parallel zu dem Gleichrichter (7) ein selbstgeführter, aktiv geregelter Hilfs-Wechselrichter (6) vorgesehen ist, mit Gleichspannungs(DC)- und Wechselspannungs(AC)-Anschlussmöglichkeiten, der zumindest einen Teil einer elektrischen Bremsenergie des elektrischen Fahrmotors (16) der dynamoelektrischen Maschine (5) elektro-motorisch nun als Antrieb des Dieselmotors (2) zum Betrieb von Hilfsaggregaten, insbesondere Hydraulikpumpen (4) und Lüftern (3) bereitstellt.

## Beschreibung

Aufgrund der bei üblichen diesel-elektrischen Fahrzeugen fehlenden Rückspeisefähigkeit des Umrichters muss der Dieselmotor auch bei Bergabfahrten weiterhin Leistung bereitstellen, um Hilfsaggregate, wie Lüfter und/oder Hydraulikpumpen, die zur Lenkung und/oder zur mechanischen Bremsbereitschaft permanent versorgt werden müssen, anzutreiben. Ebenso sind die Reibungsverluste des Antriebsstrangs zu decken, obwohl ausreichend Energie aus dem elektrischen Bremsbetrieb der oder des Fahrmotors zur Verfügung stünde.

Dieser Quasi-Leerlaufbetrieb des Dieselmotors erhöht den Treibstoffverbrauch und belastet außerdem die Umwelt durch Emissionen.

Sobald das Fahrzeug verzögert wird oder es bergab fährt, werden der oder die elektrischen Fahrmotoren zum Bremsen benutzt. Diese Bremsenergie wird über den oder die Wechselrichter in den Zwischenkreis des Umrichters eingespeist und von dort über einen Bremschopper im Bremswiderstand in Wärmeenergie umgewandelt.

Bei diesen Fahrzeugen wird aufgrund des Gleichrichters mit fehlender Rückspeisefähigkeit der Dieselmotor auch für Bergabfahren weiterhin Leistung aufbringen müssen, um die Hilfsaggregate zu versorgen.

Um diese Hilfsaggregate elektrisch aus der Bremsenergie zu versorgen, wäre es möglich, statt des Gleichrichters ein AFE (Active Front End) einzusetzen, allerdings ist ein AFE, das im Fahrbetrieb des Fahrzeugs die volle Dieselleistung übertragen muss, vergleichsweise kostspielig und beansprucht deutlich mehr Bauraum als ein Gleichrichter.

Ausgehend davon liegt der Erfindung die Aufgabe zugrunde, einen Antriebsstrang eines diesel-elektrischen Fahrzeugs bereitzustellen, das die elektrische Energie des Fahrmotor im Rückspeisebetrieb besser ausnutzt. Der Begriff diesel-elektrisches Fahrzeug steht dabei für ein Fahrzeug, das allgemein betrachtet auch einen Verbrennungsmotor aufweist.

Eine Lösung der Aufgabe ergibt sich nach Anspruch 1, 8 oder 9. Weitere Ausgestaltungen ergeben sich nach einem der Ansprüche 2 bis 7.

Eine Lösung der gestellten Aufgabe gelingt also durch ein Antriebssystem für ein diesel-elektrisches Fahrzeug mit
- zumindest einem Dieselmotor,
- zumindest einer dynamoelektrischen Maschine, vorzugsweise als Generator arbeitend, mit zumindest einem Wicklungssystem, wobei die dynamoelektrische Maschine mit dem Dieselmotor mechanisch gekoppelt ist und insbesondere die elektrische Leistung für zumindest einen elektrischen Antrieb bereitstellt,
wobei der elektrische Antrieb zumindest einen elektrischen Fahrmotor und einen Zwischenkreisumrichter aufweist, mit zumindest einem Gleichrichter und einem Wechselrichter, wobei ein parallel zu dem Gleichrichter ein selbstgeführter, aktiv geregelter Hilfs-Wechselrichter vorgesehen ist, mit Gleichspannungs(DC)- und Wechselspannungs(AC)-Anschlussmöglichkeiten, der zumindest einen Teil einer elektrischen Bremsenergie des elektrischen Fahrmotors der dynamoelektrischen Maschine elektro-motorisch nun als Antrieb des Dieselmotors zum Betrieb von Hilfsaggregaten, insbesondere Hydraulikpumpen und Lüftern bereitstellt.

Erfindungsgemäß wird bei dem Zwischenkreisumrichter, der einen Gleichrichter und zumindest einen Wechselrichter aufweist, um die Antriebsleistung von dem Dieselmotor über die dynamoelektrische Maschine, die in diesem Betriebszustand als Generator fungiert dem oder den elektrischen Fahrmotoren bereitzustellen, ein vergleichsweise preisgünstiger Gleichrichter zur Übertragung der Antriebsleistung in den Zwischenkreis eingesetzt. Um aber nun trotzdem beispielsweise bei Bergabfahrten des Fahrzeugs ein Teil der Bremsenergie der Fahrmotoren zu nutzen, ist parallel zu dem Gleichrichter ein selbstgeführter, aktiv geregelter Hilfs-Wechselrichter vorgesehen, um über den Generator - der dann als Motor arbeitet und den Dieselmotor antreibt - beispielsweise Hilfsaggregate mit Energie zu versorgen.

In diesem Betriebszustand wird der Dieselmotor ohne Treibstoffverbrauch betrieben. Der elektrisch parallel zum Gleichrichter vorgesehene selbstgeführte, aktiv geregelte Hilfs-Wechselrichter wird auch als Hilfs-AFE (Active-Front End) bezeichnet. Dieser Hilfs-AFE wird lediglich dann angesteuert, wenn der oder die Fahrmotoren Energie in den Zwischenkreis einspeisen und die Hilfsaggregate versorgt und die Reibungsverluste gedeckt werden müssen. Die darüber hinaus gehende elektrische Energie des Zwischenkreises wird dem Bremswiderstand zugeführt.

Der Hilfs-AFE ist dabei beispielsweise für ca. 5% der Antriebsnennleistung des Generators ausgelegt. Dies reicht aus um die Hilfsaggregate wie Hydraulikpumpe und/oder Lüfter zu versorgen.

An den Zwischenkreis sind weiterhin ein oder mehrere elektrische Bremswiderstände angeschlossen, die über Bremschopper ein- und ausgeschaltet werden können. Erfindungsgemäß ist ein Hilfs-AFE-Steuergerät vorgesehen, der die IGBTs im Hilfs-AFE ansteuert. Dieses Hilfs-AFE-Steuergerät und das die Bremschopper ansteuernde Bremssteuergerät werden erfindungsgemäß derart angesteuert, dass die von den Fahrmotoren in den Zwischenkreis eingespeisten Energie zunächst für die Speisung des Generators aus dem Hilfs-AFE verwendet wird und nur der diese Energie übersteigende Anteil den Bremswiderständen zugeführt wird.

Der Generator ist als dynamoelektrische Maschine ausgeführt, die sowohl generatorisch als auch motorisch betreibbar ist. Der im motorischen Betrieb nunmehr arbeitende Generator hält den Dieselmotor auf der notwendigen Drehzahl und damit die Hilfsaggregate, wie z.B. eine Hydraulikpumpe, weiterhin in Betrieb, ohne dass der Dieselmotor Treibstoff verbraucht.

Dies reduziert den Treibstoffverbrauch des Dieselmotors und dient dem Emissionsschutz.

Der Dieselmotor ist ein Verbrennungsmotor. Statt des Dieselmotors kann auch ein anderer Verbrennungsmotor, wie ein OttoMotor, betreibbar mit Benzin und/oder Gas, verwendet werden. Der Begriff diesel-elektrisches Fahrzeug kann als Synonym für entsprechende Fahrzeuge betrachtet werden, die statt eines Diesels eine andere Verbrennungskraftmaschine aufweisen.

Die Erfindung sowie weitere vorteilhafte Ausgestaltungen der Erfindung werden anhand prinzipiell dargestellter Ausführungsbeispiele näher erläutert. Darin zeigen:
- FIG 1: ein Prinzipschaltbild eines Antriebssystems,
- FIG 2: ein weiteres Prinzipschaltbild eines Antriebssystems mit mehreren Fahrmotoren,
- FIG 3: eine Darstellung eines Antriebssystems mit einem Drei-Punkt-Umrichter,
- FIG 4: eine Darstellung eines Antriebssystems mit einem Niederspannungs-Hilfs-AFE, angeschlossen über einen Transformator,
- FIG 5: eine Darstellung eines Antriebssystems mit einem Niederspannungs-Hilfs-AFE, angeschlossen an eine Generator-Hilfswicklung
- FIG 6: eine prinzipielle Kühlanordnung eines Antriebssystems.

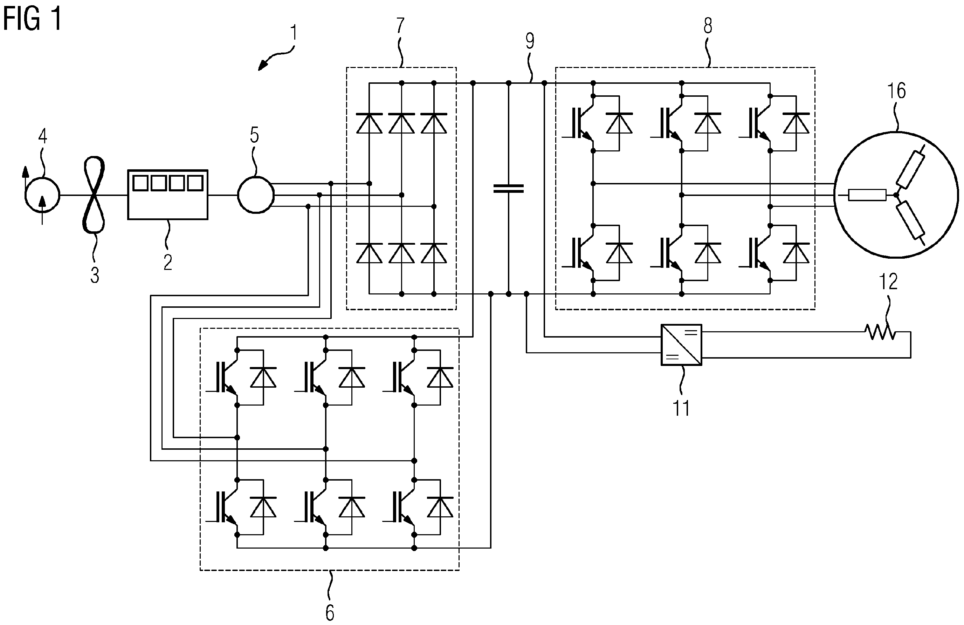

FIG 1 zeigt eine Prinzipdarstellung eines Antriebssystems 1 für ein Fahrzeug, das mit einem Dieselmotor 2 angetrieben wird. Der Dieselmotor 2 kann auch allgemein als Verbrennungsmotor ausgelegt sein, also seine Antriebsenergie aus anderen Kraftstoffen, wie Benzin oder Gas beziehen. Das Fahrzeug benötigt unter anderem Hilfsaggregate, wie z.B. einen Lüfter 3 oder eine Hydraulikpumpe 4, um Lenkbewegungen des Fahrzeugs zu gewährleisten.

Der Dieselmotor 2 ist mit einer dynamoelektrischen Maschine 5 mechanisch direkt gekoppelt, die überwiegenden als Generator betrieben wird. Ein Stator dieser dynamoelektrischen Maschine 5 weist eine Hauptwicklung 19 in einer vorgegebenen Spannungsebene (Niederspannung oder Mittelspannung) auf, die durch elektromagnetische Wechselwirkung mit einem Läufer der dynamoelektrischen Maschine 5 motorisch oder generatorisch arbeiten kann. Die dynamoelektrischen Maschine 5 als Generator versorgt u.a. elektrisch einen oder mehrere Umrichter, an den jeweils ein oder mehrere Fahrmotoren 16 elektrisch angeschlossen sind.

Der Umrichter weist zumindest einen Gleichrichter 7 und einen Wechselrichter 8 auf, die über einen Gleichspannungszwischenkreis 9 elektrisch gekoppelt sind. Der Gleichspannungszwischenkreis 9 weist mindestens einen Kondensator auf.

Elektrisch an den Gleichspannungszwischenkreis 9 ist mindestens ein Bremschopper 11 mit einem Bremswiderstand 12 angeschlossen, der unter anderem die Bremsenergie des Fahrmotors 16 in Wärme umwandelt. Außerdem ist nunmehr erfindungsgemäß an den Zwischenkreis ein Hilfs-AFE 6 angeschlossen, das direkt mit der dynamoelektrischen Maschine 5 elektrisch verbunden ist und damit elektrisch parallel zum Gleichrichter 7 angeordnet ist.

Als Hilfs-AFE 6 (Active-Front End) wird dabei ein aktiv geregelter Hilfs-Wechselrichter bezeichnet. Das Hilfs-AFE 6 kann in Niederspannungsausführung (Spannungsebenen 50V bis 700V) oder in Mittelspannungsausführung (1kV bis 6,5kV) ausgeführt sein.

Damit wird ermöglicht, dass nunmehr elektrische Energie des Zwischenkreises 9, beispielsweise aus einem Bremsvorgang des oder der Fahrmotoren 16 an die dynamoelektrische Maschine 5 rückgespeist wird, die nunmehr als Motor den Dieselmotor 2 antreibt und somit gewährleistet, dass die Hilfsaggregate, wie die Hydraulikpumpe 4 und der Lüfter 3 weiter betrieben werden. Vorteilhafterweise benötigt der Dieselmotor 2 während solcher Betriebsphasen dabei keinerlei Treibstoff und die Emissionswerte gehen in diesem Betriebszustand auf Null zurück.

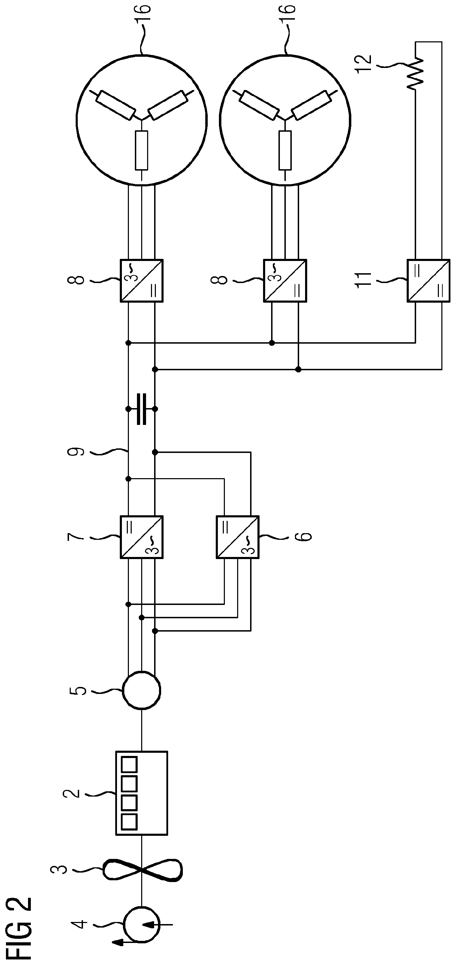

FIG 2 zeigt, dass der prinzipielle Erfindungsgedanke auch bei mehreren Fahrmotoren 16 anwendbar ist, die elektrisch aus einem gemeinsamen Zwischenkreis 9 gespeist werden.

Ebenso könnten auch mehrere Zwischenkreise elektrisch parallel geschaltet sein.

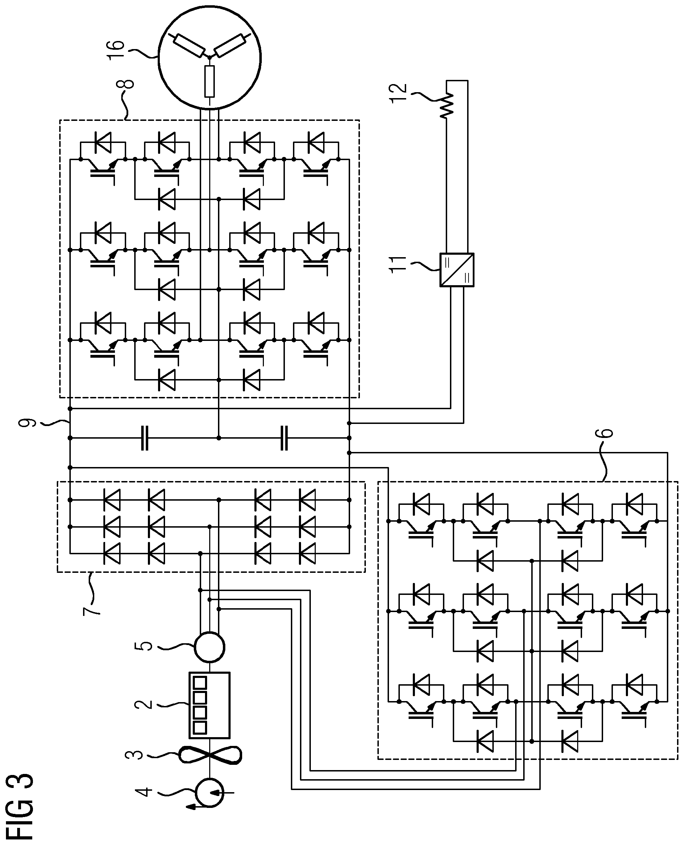

FIG 3 zeigt des Weiteren, dass der erfindungsgemäße Gedanke des Hilfs-AFE 6 grundsätzlich auch bei anderen Schaltungstopologien der Wechselrichter 8 umsetzbar ist.

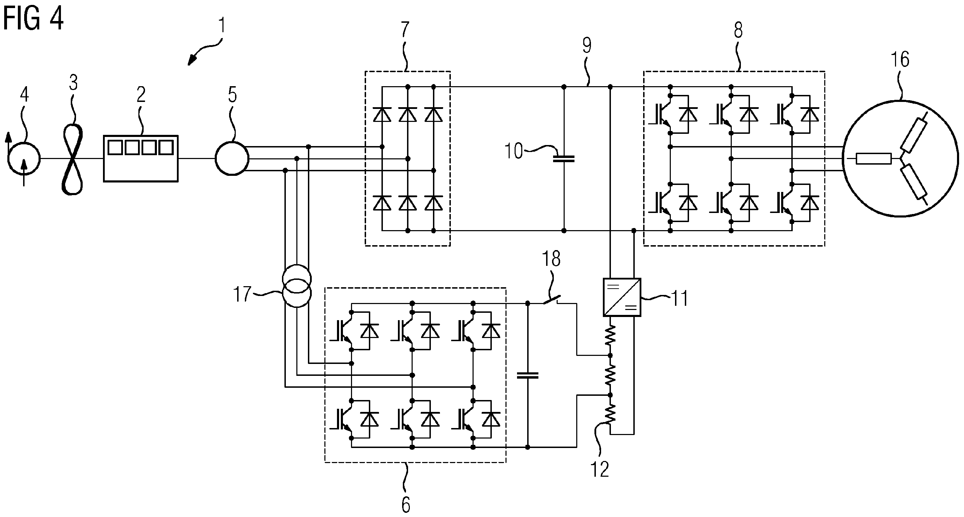

FIG 4 zeigt des Weiteren, dass der erfindungsgemäße Gedanke des Hilfs-AFE 6 auch bei Verwendung des Hilfs-AFE 6 in Niederspannungsausführung umsetzbar ist.

Dies ist insbesondere dann interessant, wenn der Umrichter in Mittelspannungstechnik ausgeführt ist, z.B. mit 3,3kV-, 4,5kV- oder 6,5kV-IGBTs. Ein Hilfs-AFE 6 in Mittelspannungstechnik ist vergleichsweise teuer und nimmt auch relativ viel Bauraum in Anspruch, obwohl das Hilfs-AFE 6 nur eine vergleichsweise kleine Leistung aufweisen muss. Um Kosten und Bauraum zu sparen, kann nunmehr gemäß FIG 4 in einer vorteilhaften Ausgestaltung auch ein Niederspannungs-Hilfs-AFE 6 verwendet werden. Zur Anpassung der Eingangsspannung des Hilfs-AFE 6 wird die Eingangs-Gleichspannung an zwei Anzapfungen des Bremswiderstandes 12 entnommen. Für die galvanische Trennung der Mittelspannung der dynamoelektrischen Maschine 5 vom Niederspannungs-Ausgang des Hilfs-AFE 6 wird ein an die jeweiligen Spannungsebenen angepasster Transformator 17 zwischen Hilfs-AFE-Ausgang und dynamoelektrische Maschine /Hauptkreis-Gleichrichter geschaltet.

Das Hilfs-AFE 6 liegt auch im Fahrbetrieb an Spannung, über seine Freilaufdioden wird auch dessen Zwischenkreis aufgeladen. Damit im Fahrbetrieb des Antriebssystems 1 kein Strom über den parallel zum Hilfs-AFE-Zwischenkreis liegenden Bremswiderstand-Anteils fließt, wird ein Schalter 18 vorgesehen, der im Fahrbetrieb des Antriebssystem 1 geöffnet, im Bremsbetrieb geschlossen wird.

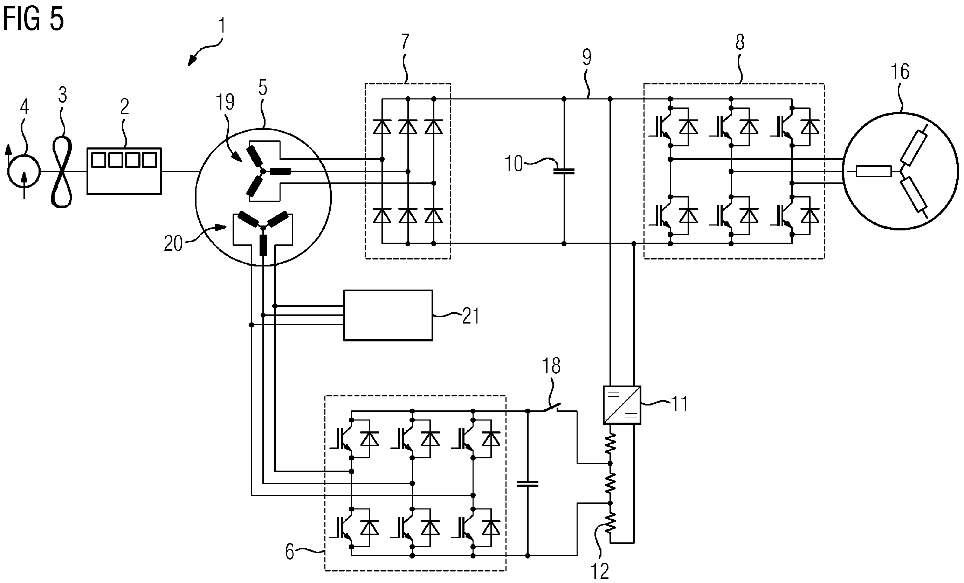

FIG 5 zeigt des Weiteren, dass der erfindungsgemäße Gedanke des Hilfs-AFE 6 auch bei Verwendung eines Hilfs-AFE 6 in einer Niederspannungsausführung ohne zusätzlichen Transformator umsetzbar ist.

Wenn die dynamoelektrische Maschine 5 als Mittelspannungsgenerator 5 neben der Hauptwicklung 19 eine Hilfswicklung 20 für die Versorgung der Stromrichter-Hilfsbetriebe 21, beispielsweise Lüfter für Generator und Fahrmotoren, besitzt, wird der Ausgang des Hilfs-AFE 6 direkt mit der Hilfswicklung 20 ohne Zwischenschaltung eines Transformators verbunden.

Diese Wicklungssysteme - Hauptwicklung 19 und Hilfsbetriebe-wicklung 20 - befinden sich in Nuten eines Stators der dynamoelektrischen Maschine 5. Die Leiter dieser Wicklungssysteme können dabei unter Berücksichtigung einer geeigneten Isolation auch in gemeinsamen Nuten des Stators angeordnet sein.

Das Hilfs-AFE 6 liegt auch im Fahrbetrieb an Spannung, über seine Freilaufdioden wird auch dessen Zwischenkreis aufgeladen. Damit im Fahrbetrieb des Antriebssystems 1 kein Strom über den parallel zum Hilfs-AFE-Zwischenkreis liegenden Bremswiderstand-Anteils fließt, wird ein Schalter 18 vorgesehen, der im Fahrbetrieb des Antriebssystem 1 geöffnet, im Bremsbetrieb geschlossen wird.

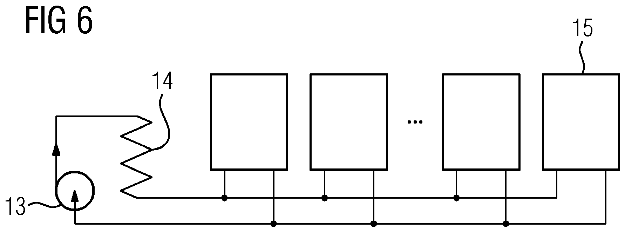

FIG 6 zeigt prinzipiell, dass, falls der Umrichter flüssigkeitsgekühlt werden sollte, Kühlelemente 15 des Hilfs-AFE 6 in einen bestehenden Flüssigkeitskühlkreislauf anschließbar sind, so dass auch eine ausreichende Kühlung dieses Hilfs-AFE 6 gewährleistet ist. Dabei fördert eine Kühlpumpe 13 eine Kühlflüssigkeit in einem geschlossenen Kühlkreislauf, wobei aus den Wärmequellen, wie beispielsweise dem Hilfs-AFE 6 Wärme aufgenommen wird und die Kühlflüssigkeit mittels einer Rückkühlers 14 rückgekühlt wird.

Falls eine Luftkühlung vorliegen sollte, werden dementsprechende Kühlelemente, die mit Rippen versehen sind, am Hilfs-AFE 6 angebracht und so positioniert, dass diese in einem bereits vorhandenen Kühlluftstrom liegen.

Durch die modulare Ergänzung des Hilfs-AFE 6 an bestehende Antriebssysteme und deren Kühlsysteme ist das Hilfs-AFE 6 auch einfach an bestehenden Fahrzeugen nachrüstbar.

Die diesel-elektrischen Fahrzeuge können dabei Miningfahrzeuge, Baumaschinen, Wald- und Landwirtschaftsmaschinen, Hafenfahrzeuge, Industriefahrzeuge, öffentliche Busse, für den Straßenverkehr zugelassene LKWs oder PKWs sein.

## Patentansprüche

1. Antriebssystem (1) für ein diesel-elektrisches Fahrzeug mit
- zumindest einem Dieselmotor (2),
- zumindest einer dynamoelektrischen Maschine (5), vorzugsweise als Generator (5) arbeitend, mit zumindest einem Wicklungssystem, wobei die dynamoelektrische Maschine (5) mit dem Dieselmotor (2) mechanisch gekoppelt ist und insbesondere die elektrische Leistung für zumindest einen elektrischen Antrieb bereitstellt,
wobei der elektrische Antrieb zumindest einen elektrischen Fahrmotor (16) und einen Zwischenkreisumrichter aufweist, mit zumindest einem Gleichrichter (7) und einem Wechselrichter (8), wobei ein parallel zu dem Gleichrichter (7) ein selbstgeführter, aktiv geregelter Hilfs-Wechselrichter (6) vorgesehen ist, mit Gleichspannungs(DC)- und Wechselspannungs(AC)-Anschlussmöglichkeiten, der zumindest einen Teil einer elektrischen Bremsenergie des elektrischen Fahrmotors (16) der dynamoelektrischen Maschine (5) elektro-motorisch nun als Antrieb des Dieselmotors (2) zum Betrieb von Hilfsaggregaten, insbesondere Hydraulikpumpen (4) und Lüftern (3) bereitstellt.

2. Antriebssystem (1) für ein diesel-elektrisches Fahrzeug nach Anspruch 1, **dadurch gekennzeichnet, dass** am Zwischenkreis (9) des Zwischenkreisumrichters zumindest ein Bremswiderstand (12) elektrisch angeschlossen ist.

3. Antriebssystem (1) für ein diesel-elektrisches Fahrzeug nach Ansprüchen 1 oder 2, **dadurch gekennzeichnet, dass** der DC-Eingang eines Hilfs-Wechselrichters (6) an Anzapfungen des Bremswiderstandes (12) angeschlossen ist.

4. Antriebssystem (1) für ein diesel-elektrisches Fahrzeug nach einem der vorhergehenden Ansprüche, **dadurch gekennzeichnet, dass** der 3∼AC-Ausgang des Hilfs-Wechselrichters (6) über einen Transformator (17) an der dynamoelektrischen Maschine (5) angeschlossen ist.

5. Antriebssystem (1) für ein diesel-elektrisches Fahrzeug nach einem der Ansprüche 1 bis 3, **dadurch gekennzeichnet, dass** der 3∼AC-Ausgang eines Hilfs-Wechselrichters (6) an einer Hilfsbetriebe-Wicklung (20) der dynamoelektrischen Maschine (5) angeschlossen ist.

6. Antriebssystem (1) für ein diesel-elektrisches Fahrzeug nach Anspruch 1, **dadurch gekennzeichnet, dass** ein Steuergerät vorgesehen ist, das im Bremsbetrieb des Fahrmotors (16) die elektrische Energie des Zwischenkreises (9) auf den Hilfswechselrichter (6) und den Bremswiderstand (12) aufteilt.

7. Antriebssystem (1) für ein diesel-elektrisches Fahrzeug nach einem der Ansprüche 1 bis 3, wobei statt des Dieselmotors ein Verbrennungsmotor eingesetzt ist, welcher mittels Benzin und/oder Gas betreibbar ist.

8. Diesel-elektrisches Fahrzeug, welches ein Antriebssystem (1) nach einem der Ansprüche 1 bis 7 aufweist.

9. Verfahren zum Betrieb eines diesel-elektrischen Fahrzeugs, bei welchem ein Antriebssystem (1) nach einem der Ansprüche 1 bis 7 verwendet wird.
